Europäisches Patentamt

European Patent Office

Office européen des brevets

(11) Publication number: **0 137 671**
A1

# EUROPEAN PATENT APPLICATION

(21) Application number: 84305714.2

(22) Date of filing: 22.08.84

(51) Int. Cl.⁴: **A 23 L 2/08**
A 23 L 2/06, A 23 L 2/12

(30) Priority: 06.09.83 US 529248

(43) Date of publication of application:
17.04.85 Bulletin 85/16

(84) Designated Contracting States:
CH DE LI

(71) Applicant: PHILIP MORRIS INCORPORATED
120 Park Avenue
New York, New York 10017(US)

(72) Inventor: Winterson, Warren D.
12000 Fairlington Lane
Midothian Virginia 23113(US)

(72) Inventor: Assar, Kamal
906 Castle Hollow Road
Midlothian Virginia 23113(US)

(72) Inventor: McCamant, Patrick
1048 Robmont Drive
Richmond Virginia 23235(US)

(74) Representative: Bass, John Henton et al,
REDDIE & GROSE 16 Theobalds Road
London WC1X 8PL(GB)

(54) Production of juice concentrates.

(57) Concentrated, sterile fruit juice is prepared without heat treatment of the liquid portion by separating fresh fruit juice into pulp and liquid portions and sterilizing the liquid portion, for example by ultrafiltration. The liquid portion is then freeze-concentrated. Any pulp which is to be recombined is pasteurized.

PRODUCTION OF JUICE CONCENTRATES


Methods have been proposed for producing sterile, concentrated fruit juice, but to date none has been disclosed which is completely capable of producing such a product with unaltered flavor.

The process of freeze concentrating the liquid portion of fruit juice is known. A description of the process and some modifications will be found in the article by S. S. Deshpande, H. R. Bolin, and D. K. Salunkhe, Food Technology, May, 1982, 68-82.

According to that reference, freeze concentration is made easier and in fact is made feasible by separation from the liquid portion of all or most of the pulp (insoluble solids). It was recognized that after such a separation the pulp could be thermally treated (pasteurized) to reduce or eliminate enzymes and microorganisms so as to stabilize that portion of the juice. Brent et al., U.S. 2,724,652, propose to separate the two components by, for example, centrifuging and to pasteurize the pulp portion while the liquid portion, containing less than 3 percent pulp, is concentrated without heating above ambient temperature by evaporation at reduced pressure. This concentrate is then recombined with the cooled pasteurized pulp. The process has desirable features in that it avoids heating the liquid portion and it eliminates much of the enzymatic and microbial activity. At the same time, it fails.

to achieve sufficient sterilization and it subjects the liquid portion to vacuum conditions which may remove desirable volatile flavor components.

Harrell, in U.S. 3,118,770, describes a related process for citrus juice drink which calls for separation of the juice into a pulp and a liquid fraction. The liquid portion is optionally concentrated, but the principal attention is paid to the pulp which undergoes one or more homogenizing or comminuting operations and two heating steps; the amount of treated pulp recombined with the liquid portion is carefully calculated. This process either fails to concentrate the juice, or if concentration takes place there is no effort to avoid heating the liquid portion with resulting damage to the flavor.

The object of the present process is to produce a sterile juice concentrate while avoiding the flavor-affecting operations on the liquid portion of heating above ambient temperature and reducing pressure.

These goals are realized by (1) separating the juice into liquid and pulp fractions, including a sterilizing operation on the liquid fraction which may be for example ultrafiltration, (2) pasteurizing the pulp fraction or discarding it, (3) freeze concentrating the liquid fraction under commercially sterile conditions, and (4) recombining into the concentrated liquid any of the pulp fraction that is to be retained. The key to the process is the step (1) separation whereby the liquid fraction is sterilized without heat treatment.

In order to produce a juice concentrate having the most desirable qualities, it is preferred to use only natural fruit juices. It is important to subject the major portion of the juice to temperatures not substantially above 30°C. It is desirable, though not essential, to expose the juice as little as possible to air or oxygen, by blanketing during the processing steps with inert gas such as nitrogen.

The procedure for extracting the juice from the fruit is not critical, and may be any usual commercial procedure, though preferably when the fruit is citrus, one which optimizes inclusion of oil from citrus peel. The juice and pulp are separated from seeds, peel, and other unwanted solids in conventional fashion by a finisher as for citrus juice.

The next step in the process must be performed in such a manner that the resultant juice is sterile. It can be accomplished in one or two stages. For single stage operation, the juice from the finisher is pumped directly to an ultrafiltration unit where separation of pulp from juice takes place, by screening (the final screen should have no more than 230 micron openings to avoid plugging at the next stage) and then ultrafiltering, and the juice so produced is commercially sterile. For two stage operation, the juice is first reduced in pulp content by known processes such as centrifugation, filtration, or screening, and subsequently ultrafiltered to complete pulp removal and produce commercially sterile juice. Other modes of processing include two step ultrafiltration, or ultrafiltration followed by microfiltration. Ultrafiltration is accomplished by forcing a liquid through a membrane; microfiltration employs a more conventional filter pad which retains particles larger than 0.2 micron (Gelman Instrument Co., Ann Arbor, Mich. or Nalge Co., Rochester, NY). One ultrafiltration system employs bundles of hollow fiber membranes so arranged that the process stream flows through the interior of the fibers under pressure; the pressure causes some of the liquid and any solutes which can pass through the membrane to do so (this is termed permeate), while large solute molecules and particles are retained and continue through the interior of the fibers or build up on the inner surface to be possibly swept off by the process stream. The size of solute molecules which may pass through the fiber skin is determined by the nature of the fiber material. Fibers may be selected to provide a "cut-off" at a predetermined molecular weight. The process stream exiting from the fibers is normally recirculated with addition of new juice to make up for the permeate volume. The membrane cut-off for purposes of this invention should be in the range of 10,000 to 100,000 molecular weight.

The juice portion optionally may be deoiled using conventional equipment for this step.

The particulates portions, which we will designate pulp, are then removed and discarded; or they are treated by pasteurization, consisting of for example heating to 86 to 99°C for two to twenty seconds, and set aside for subsequent recombining. The pasteurization sterilizes the pulp and inactivates the enzymes which will be associated largely with the pulp portion. Pulp sterilization should be executed with care, as some flavor constituents are known to be associated with pulp, although this is not critical to the invention.

The liquid or serum portion, sterile by virtue of the ultrafiltration treatment, now is concentrated by freeze concentration; thus there is no flavor-affecting heating. A recommended apparatus is the Grenco freeze concentration unit Grenco GFC-W33 (Grenco Special Applications B.V., De Beverspijken 7, 5201 AH 'S Hertogenbosch, Holland, see Thijssen, U.S. 3,777,892; 3,872,009; and Thijssen et al., U.S. 4,004,886). Components of the unit are a scraped surface heat exchanger, feed tank, tank crystallizer, wash column with fill device, and associated refrigeration equipment and melter. Operation of this equipment is well described by the manufacturer; also see Deshpande et al. cited above.

As a final step, the juice concentrate may be combined with all or a portion of the pasteurized pulp in a mixer. The product may then be frozen, refrigerated, or otherwise prepared for distribution and sale. Citrus oil or other sterile flavor supplement optionally may be added as well.

The product, when diluted with fresh water to beverage concentration, is unusually fresh-tasting and has the aroma and appearance of fresh juice.

The process is illustrated by the following examples.

### Example 1

Reconstituted California lemon juice (Ventura Coastal Co., 2325 Vista Del Mar Drive, Ventura, California) was reinforced with lemon oil (California type, Active Ingredients Co., Oxford, NJ, lot no. 1183) at a level of 1.8696 mL per kg of concentrate, equivalent to 0.025 % oil in single strength juice, 7° Brix. This was passed through an ultrafiltration unit (Romicon, Inc., Woburn, MA). This unit is comprised of a pump, a strainer, and an ultrafiltration cartridge. The strainer used had 178 micron openings, the ultrafiltration membrane, polysulfone, had a cutoff of 50,000 molecular weight. The ultrafiltration unit had been pretreated with caustic solution and chlorinated water followed by rinsing with dechlorinated water.

The permeate stream from this unit was mixed in a similarly cleaned mix tank with a flavor mixture for one minute. The flavor mixture consisted of 2g ethyl butyrate, 2g ethyl acetate, 5g acetaldehyde, and 300g ethanol diluted to 1L with deionized water, and it was added in the proportion of 1.00 mL per L of juice. The mixture was then pumped promptly to the feed tank of a Grenco freeze concentration unit; the feed tank was maintained under a nitrogen headspace.

The freeze concentrator which had undergone a like precleaning was operated continuously for 58 hours. A startup period of five hours was required. Except at wash column start-up, no solids or aroma could be detected in the wash water. From 1050 kg of single strength juice, 155 kg of concentrate at 45.8° Brix (corr.) was recovered, representing 98.9% yield. It was concluded that solids loss in washwater was insignificant. Water removal rate at the finish was 10.5 kg per hour. Steady operation of the wash column was realized; this was in part a result of pulp reduction by ultrafiltration.

Analysis of the product showed the following recoveries of added components:

## Table I

| | | | |
|---|---|---|---|
| acetaldehyde | 88.7% | ethanol | 93.6% |
| ethyl acetate | 100.0 | ethyl butyrate | 88.1 |
| limonene | 80 | linalool | 100 |
| terpinen-4-ol | 92 | neral | 100 |
| geranial | 100 | alpha-terpineol | 87 |
| geranyl acetate | 100 | benzyl alcohol | 96 |

## Example 2

Orange juice was reconstituted with water first filtered through a 5 micron filter, from concentrate to which essences and oils had been added by the manufacturer, Citrus Central Cooperative, Orlando, Florida. The juice had little floating pulp but approximately 5% by volume of sinking pulp. The concentration was measured as 12° Brix. This was passed through a Romicon ultrafiltration unit equipped as in Example 1 to clarify and sterilize the juice. The permeate stream which exited was collected in sterile bottles.

Microbiological assay of this product and of control and retentate (recyclate) samples showed a microorganism count listed in Table II. A pour plate method was used, with orange serum agar and three day incubation at 30°C. Most microorganisms were yeast, some were lactobacilli; molds were found only in retentate.

## Table II

| Trial I | Microorganisms per mL | | |
|---|---|---|---|
| | Undiluted | Diluted 100x | Ave. Count |
| Feed (unclarified) | spreader | 1 | 100 |
| | spreader | 1 | |
| Clarified 5 min. | 20 | 0 | 23 |
| | 26 | 0 | |
| Clarified 10 min. | 30 | 0 | 26 |
| | 22 | 0 | |
| Clarified flux, 10 min. | 15 | 0 | 15 |
| | 14 | 0 | |
| Retentate | spreader | 3 | 300 |
| | spreader | 2 | |

0137671

-7-

Table III

| Trial II | Microorganisms per mL | | |
| | Undiluted | Diluted 100x | Ave. Count |
| --- | --- | --- | --- |
| Feed (unclarified) | 5 | 0 | 5 |
| | spreader | 0 | |
| Clarified 5 min. | 72 | 0 | 79 |
| | 86 | 0 | |
| Clarified 10 min. | 70 | 0 | 76 |
| | 81 | 1 | |
| Clarified 15 min. | 57 | 0 | 62 |
| | 66 | 0 | |
| by-pass (after 15 min.) | 59 | 0 | 66 |
| | 72 | 0 | |

Though sterilization is not complete, ultrafiltration brings the product well below the industrial standard for single-strength orange juice (about 1000/mL total count and 250 yeast/mold). The juice is "commercially sterile." The count for feed in trial II is abnormally low and is unexplained.

The clarified juice is then subjected to freeze concentration as in Example 1.

When a similar freeze concentration run was attempted with conventionally processed reduced juice pulp, which was not ultrafiltered, the target of 43° Brix was realized, but over many hours' running the wash column went out of equilibrium repeatedly with consequent loss of product and time. This problem appeared to be caused by the interference of the remaining pulp solids with the optical level sensor which is relied on to maintain the wash front. This run provides evidence that in addition to sterilizing juice, the ultrafiltration step provides an important aid to performance of the freeze concentration unit.

CLAIMS

1. A method of sterilizing fruit juice characterised in that a liquid portion of said juice is subjected to ultrafiltration to effect sterilizing without exposing said portion to elevated temperature.

2. A method of preparing a concentrated fruit juice, comprising the steps of separating and removing at least a portion of the pulp content containing insoluble solids in order to obtain a liquid portion of juice, and freeze concentrating the liquid portion, the method being characterised in that the separating is performed in such a way as to produce a sterile liquid portion, and the concentrating is performed in such a way as to maintain the sterility of the liquid portion, whereby a concentrated juice is produced which has not been subjected to elevated temperature.

3. A method according to claim 2 characterised in that the separating includes ultrafiltration.

4. A method according to claim 2 or 3 characterised in that the pulp portion is pasteurized and recombined with the liquid portion after the liquid portion has been concentrated.

5. A method according to claim 3 characterised in that prior to being subjected to ultrafiltration the fruit juice is passed through a filtering screen.

6. A method according to claim 5 characterised in that the screen is provided with openings no more than 230 micron across.

European Patent
Office

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | EP-A-0 030 339 (HENKEL KGAA) <br> * Claims 1, 2 * | 1-3 | A 23 L 2/08 <br> A 23 L 2/06 <br> A 23 L 2/12 |
| | --- | | |
| A | EP-A-0 044 748 (PROCTER & GAMBLE CO.) <br> * Pages 24-26, example 1 * | | |
| | --- | | |
| D,A | US-A-3 118 770 (H.W. HARRELL) <br><br> * CLaims 1-3 * | | |
| | ----- | | |

| | | | TECHNICAL FIELDS SEARCHED (Int. Cl.4) |
|---|---|---|---|
| | | | A 23 L 2/00 |

The present search report has been drawn up for all claims

| Place of search <br> BERLIN | Date of completion of the search <br> 26-11-1984 | Examiner <br> SCHULTZE D |
|---|---|---|